# EUROPÄISCHE PATENTSCHRIFT

(11) **EP 2 782 777 B1**
(45) Veröffentlichungstag und Bekanntmachung des Hinweises auf die Patenterteilung: **23.03.2016**
(21) Anmeldenummer: 12809685.6
(22) Anmeldetag: 12.12.2012
(51) Int. Cl.: B60N 2/015, B61D 33/00, B60N 2/07, B60N 2/24, B60N 2/54, B60N 2/50

(54) **BEFESTIGUNGSEINRICHTUNG UND BEFESTIGUNGSANORDNUNG ZUR BEFESTIGUNG EINES INNENAUSSTATTUNGSELEMENTS EINES FAHRZEUGES**
FASTENING DEVICE AND FASTENING ARRANGEMENT FOR FASTENING AN INTERIOR EQUIPMENT ELEMENT OF A VEHICLE
DISPOSITIF DE FIXATION ET ENSEMBLE DE FIXATION PERMETTANT DE FIXER UN ÉLÉMENT D'ÉQUIPEMENT INTÉRIEUR D'UN VÉHICULE

(30) Priorität: 31.01.2012 DE 102012201291
(43) Veröffentlichungstag der Anmeldung: 01.10.2014
(73) Patentinhaber: Siemens Aktiengesellschaft, 80333 München (DE)
(72) Erfinder: CALOMFIRESCU, Mihail, 45359 Essen (DE)
(86) Internationale Anmeldenummer: PCT/EP2012/075177
(87) Internationale Veröffentlichungsnummer: WO 2013/113439

(56) Entgegenhaltungen:
- DE-A1-102005 037 945
- DE-A1-102008 010 719
- DE-B3-102007 058 207

## Beschreibung

Die Erfindung betrifft eine Befestigungseinrichtung zur Befestigung eines Innenausstattungselements, insbesondere eines Fahrgastsitzes, an einer Seitenwand eines Fahrzeuges, bevorzugt eines Schienenfahrzeuges, mit wenigstens einem Befestigungselement, das eine C-Profilschiene zur Aufnahme von Nutensteinen für eine wandseitig lösbare Befestigung des Innenausstattungselements an der Befestigungseinrichtung bildet, wobei die Befestigungseinrichtung ihrerseits an zumindest einer Struktur der Seitenwand befestigbar oder befestigt ist. Die Erfindung betrifft weiterhin eine Befestigungsanordnung zur Befestigung eines Innenausstattungselements, insbesondere eines Fahrgastsitzes, an einer Seitenwand eines Fahrzeuges, bevorzugt eines Schienenfahrzeuges, mit mindestens einer Struktur der Seitenwand und einer an dieser Struktur dauerhaft oder lösbar befestigten Befestigungseinrichtung.

Eine derartige Einrichtung und eine derartige Anordnung sind zum Beispiel aus der DE 10 2008 039 165 A1 bekannt, in der eine Befestigungseinrichtung zur Befestigung eines Innenausstattungselements, insbesondere eines Fahrgastsitzes, an einer Seitenwand eines Fahrzeuges beschrieben wird, die die Merkmale des Oberbegriffs des Anspruchs 1 zeigt.

Diese Einrichtung weist wenigstens ein Befestigungselement auf, das eine C-Profilschiene zur Aufnahme von Nutensteinen für eine wandseitig lösbare Befestigung des Innenausstattungselements an der Befestigungseinrichtung bildet. Dabei ist die Befestigungseinrichtung ihrerseits an zumindest einer Struktur der Seitenwand einstückig befestigt.

Aufgabe der vorliegenden Erfindung ist es, eine Befestigungseinrichtung und eine Befestigungsanordnung anzugeben, die eine einfache Befestigung und eine sichere Nutzung des Innenausstattungselements im Innenraum des Fahrzeugs gewährleisten.

Die Lösung der Aufgabe erfolgt durch die Merkmale der unabhängigen Ansprüche 1 und 10. Vorteilhafte Ausgestaltungen sind in den Unteransprüchen angegeben.

Bei der erfindungsgemäßen Befestigungseinrichtung ist vorgesehen, dass diese Befestigungseinrichtung mindestens eine elastische Dämpfungseinrichtung zum elastischen befestigen der Befestigungseinrichtung an der als Wandstruktur ausgebildeten mindestens einen Struktur der Seitenwand mittels einer Klebeverbindung und mindestens ein elastisches Dämpfungselement zum elastischen Abstützen der Befestigungseinrichtung auf mindestens einer als Vorsprung ausgebildeten weiteren Struktur der Seitenwand aufweist.

Im einfachsten Fall ist das elastische Dämpfungselement an seiner nach außen gewandten Seite mit einer Klebeschicht versehen, die bei montierter Befestigungseinrichtung die Klebeverbindung mit der Wandstruktur bildet.

Eine Befestigung eines Innenausstattungselements, insbesondere eines Fahrgastsitzes, an einer Seitenwand eines Fahrzeuges über eine derartige Befestigungseinrichtung mit mindestens einer elastischen Dämpfungseinrichtung und mindestens einem elastischen Dämpfungselement hat den Vorteil, dass eine mechanische wie thermische Entkopplung zwischen Innenausstattungselement und Seitenwand gewährleistet ist. Für die Nutzer von Innenausstattungselementen wie einem Fahrgastsitz bedeutet dies einen Gewinn an Komfort. Gleichzeitig ergibt sich durch derartige elastische Teile ein Toleranzausgleich bei der Montage, sodass sich der Einbau und die Befestigung des Innenausstattungselements an einer Seitenwand vereinfacht.

Darüber hinaus sorgt eine solche Befestigungseinrichtung dafür, dass die elastische Dämpfungseinrichtung und das elastisehe Dämpfungselement bei einem Aufprall eine gewisse Energie aufnimmt, was die Sicherheit der Fahrzeuginsassen erhöht.

Mit Vorteil besteht das Befestigungselement aus Leichtmetall oder einer Leichtmetalllegierung. Insbesondere ist dabei vorgesehen, dass das Befestigungselement aus Aluminium oder einer Aluminiumlegierung besteht. Das Leichtmetall Aluminium ist ein bevorzugter Werkstoff für ein eine C-Profilschiene ausbildendes Befestigungselement.

Gemäß einer bevorzugten Ausführungsform der Erfindung ist das Befestigungselement als ein Strangpressprofil ausgebildet.

Gemäß einer weiteren bevorzugten Ausführungsform der Erfindung ist vorgesehen, dass das Befestigungselement beidseitig der C-Profilschiene flügelartige Ausleger aufweist, an denen die elastischen Dämpfungseinrichtungen angeordnet sind. Die Befestigung der elastischen Dämpfungseinrichtungen an diesen Auslegern gewährleistet eine hohe Stabilität.

Gemäß noch einer weiteren bevorzugten Ausführungsform der Erfindung ist vorgesehen, dass die mindestens eine Dämpfungseinrichtung eine Dämpfungsschicht aus einem Schaummaterial aufweist. Die Dämpfungsschicht aus einem Schaummaterial gewährleistet eine gute thermische und mechanische Entkopplung von Seitenwand und Innenausstattungselement.

Gemäß einer bevorzugten Ausgestaltung der Erfindung weist die Dämpfungseinrichtung ein Blechelement auf, das auf der der Grenzfläche der Dämpfungsschicht zum Befestigungselement gegenüberliegenden Oberseite der Dämpfungseinrichtung angeordnet ist. Ein derartiges Blechelement sorgt für eine gleichmäßige Druckverteilung auf die darunterliegende elastische Dämpfungsschicht. Gleichzeitig schützt das Blechelement die Dämpfungsschicht vor äußeren Einflüssen. Dies ist insbesondere für eine Dämpfungsschicht aus einem Schaummaterial von Vorteil. Diese sind oft sehr empfindlich.

Mit Vorteil ist vorgesehen, dass das Blechelement auf seiner Oberseite mit einer die Klebeverbindung bildenden elastischen Klebeschicht zur Befestigung an der Wandstruktur der Seitenwand versehen ist. Diese Klebeschicht trägt zur Elastizität und zur daraus resultierenden Entkopplung bei.

Gemäß einer weiteren bevorzugten Ausgestaltung der Erfindung bildet die Dämpfungseinrichtung oder zumindest eine der mehreren Dämpfungseinrichtungen in einem ihrer Seitenbereiche mit dem Befestigungselement ein durchgehend ebenes Kopfende, an dem das elastische Dämpfungselement angeordnet ist.

Schließlich ist mit Vorteil vorgesehen, dass das Dämpfungselement ein Dämpfungselement aus Gummi ist.

Bei der erfindungsgemäßen Befestigungsanordnung ist vorgesehen, dass die mindestens eine Struktur als Wandstruktur ausgebildet ist, wobei die Befestigungsanordnung mindestens eine als Vorsprung ausgebildete weitere Struktur der Seitenwand umfasst. Die Befestigungseinrichtung ist als eine vorstehend genannte Befestigungseinrichtung ausgebildet, die über ihre mindestens eine elastische Dämpfungseinrichtung an der Wandstruktur elastisch befestigt ist und sich über ihr mindestens ein elastisches Dämpfungselement auf dem Vorsprung abstützt. Die beiden Strukturen der Seitenwand bilden insbesondere gemeinsam eine Innenkante aus. An dieser Innenkante kann sich das Innenausstattungselement über die Befestigungseinrichtung abstützen bzw. ist an dieser befestigt.

Nachfolgend werden Ausführungsbeispiele der Erfindung anhand von Zeichnungen näher erläutert. Darin zeigt
- Fig.1: eine Befestigungsanordnung gemäß einer ersten bevorzugten Ausführungsform der Erfindung und
- Fig.2: eine Befestigungsanordnung gemäß einer zweiten bevorzugten Ausführungsform der Erfindung.

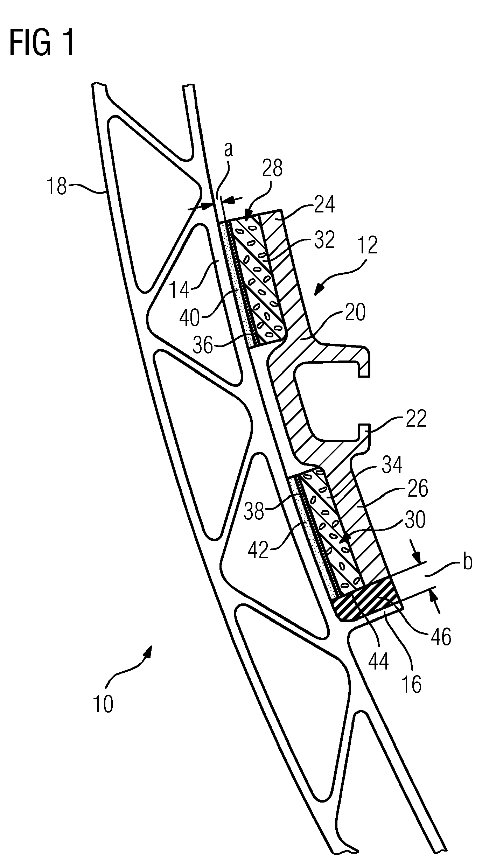

Die Figur 1 zeigt eine Befestigungsanordnung 10 mit einer Befestigungseinrichtung 12 und zwei Strukturen 14, 16 einer Seitenwand 18 eines als Schienenfahrzeug ausgebildeten Fahrzeugs. Die eine der beiden Strukturen 14 ist eine von der Innenseite der Seitenwand 18 in einem Bereich gebildete Wandstruktur und die weitere der beiden Strukturen 16 ist ein sich in das Innere des Fahrzeugs erstreckender Vorsprung. Die beiden Strukturen 14, 16 bilden eine Innenkante an der Seitenwand 18 aus.

Die Befestigungseinrichtung 12 ist eine Befestigungseinrichtung zur Befestigung eines (nicht gezeigten) Innenausstattungselements an der Seitenwand 18. Das Innenausstattungselement ist insbesondere ein Fahrgastsitz oder eine Fahrgastsitzreihe. Die Befestigungseinrichtung 12 weist ein Befestigungselement 20 auf, das eine C-Profilschiene 22 zur Aufnahme von Nutensteinen für eine wandseitig lösbare Befestigung des wandgestützten Elementes bildet. Eine derartige Befestigung eines Innenausstattungselements mittels Nutenstein ist zum Beispiel aus der eingangs erwähnten DE 10 2008 039 165 A1 bekannt.

Das Befestigungselement 20 ist als ein einstückiges Strangprofil aus Aluminium (Aluminium-Strangprofil) ausgebildet, das die C-Profilschiene 22 und zwei flügelartige Ausleger 24, 26 beidseitig der C-Profilschiene 22 aufweist, die jeweils einstückig mit der C-Profilschiene 22 verbunden sind. Die Ausleger 24, 26 erstrecken sich in Längsrichtung der C-Profilschiene 22 bzw. des Befestigungselementes 20 über deren gesamte Länge. Die Längsrichtung ist an der Seitenwand 18 horizontal ausgerichtet. Das an der Seitenwand 18 befestigte Befestigungselement 20 ist dabei so ausgerichtet, dass ein erster der Ausleger 24 oberhalb der C-Profilschiene 22 und ein zweiter der Ausleger 24 unterhalb der C-Profilschiene 22 angeordnet ist.

An jedem der Ausleger 24, 26 ist auf deren der Seitenwand zugeordneten Seite eine elastische Dämpfungseinrichtung 28, 30 der Befestigungseinrichtung 12 befestigt. Jede der Dämpfungseinrichtungen weist eine sich an das Befestigungselement 20, genauer gesagt die Ausleger 24, 26 des Befestigungselements 20, anschließende elastische Dämpfungsschicht 32, 34 aus einem Schaummaterial auf. Weiterhin weist jede der Dämpfungseinrichtungen 28, 30 ein Blechelement 36, 38 auf, das auf der der Grenzfläche der jeweiligen Dämpfungsschicht 32, 34 zum Befestigungselement 20 gegenüberliegenden Oberseite der Dämpfungseinrichtung 28, 30 angeordnet ist. Das jeweilige Blechelement 36, 38 ist auf seiner Oberseite mit einer die Klebeverbindung bildenden elastischen Klebeschicht 40, 42 versehen, mittels der die Befestigungseinrichtung an der Wandstruktur 14 der Seitenwand 18 befestigt ist. Diese Klebeschicht weist eine durchgehende endliche Dicke a auf.

Die untere der beiden Dämpfungseinrichtungen 30 bildet in einem ihrer Seitenbereiche mit dem Befestigungselement 20, genauer gesagt mit dem entsprechenden Ausleger 26 des Befestigungselements 20, ein durchgehend ebenes Kopfende 44, an dem ein elastisches Dämpfungselement 46 der Befestigungseinrichtung 12 angeordnet ist. Dieses Dämpfungselement 46 weist eine durchgehende endliche Stärke b auf und ist ein Dämpfungselement aus Gummi. Über dieses Dämpfungselement 46 stützt sich die Befestigungseinrichtung 12 an dem Vorsprung 16 ab.

Ein Toleranzausgleich kann durch Variation der Dicke a der Klebeschichten 40, 42 sowie der Stärke b des Dämpfungselements erreich werden.

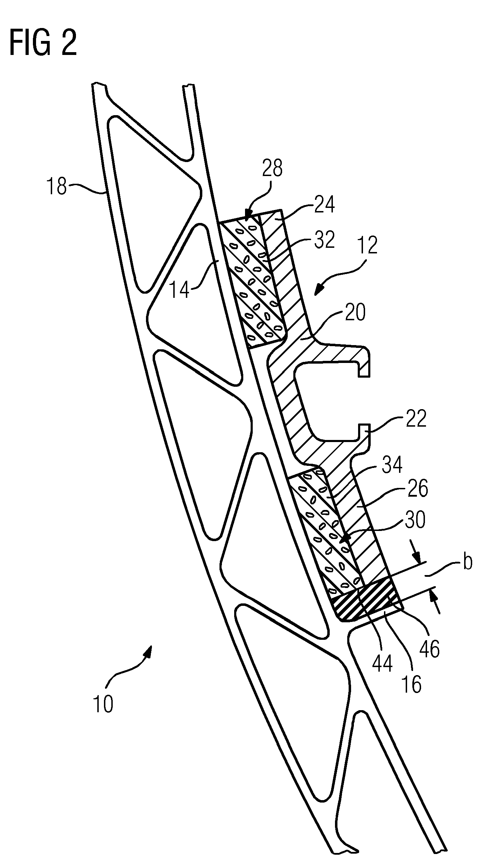

Die Fig. 2 zeigt eine Befestigungsanordnung 10, die im Wesentlichen der Befestigungsanordnung 10 der Fig. 1 entspricht, sodass hier nur auf die Unterschiede eingegangen werden soll. Die Unterschiede liegen in der Ausgestaltung der Dämpfungseinrichtungen 28, 30 sowie der Klebeverbindungen.

Die in der Fig. 2 gezeigten Dämpfungseinrichtungen 28, 30 weisen je eine Dämpfungsschicht 32, 34 und darauf aufgebrachten Klebstoff zur Bildung der Klebeverbindung auf. Die so gebildete Klebeverbindung ist eine rein strukturelle Verbindung ohne zusätzliche Anforderungen an deren Elastizität und an die Möglichkeiten des Toleranzausgleichs.

Die in Fig. 1 dargestellte erste Alternative und deren Vorteile soll im Folgenden noch einmal mit anderen Worten beschrieben werden:
Die Befestigungseinrichtung 12 weist das als Alu-Strangpressprofil ausgebildetes Befestigungselement 20 auf, welches die C-Profilschiene beinhaltet, auf der ein Dämpfungsschichten 32, 34 bildender elastischer Schaum geklebt ist. Auf diesen Schaum ist jeweils noch das dünne Blechelement 36, 38 mit strukturellem Klebstoff geklebt, um den Anpressdruck bei der Verklebung flächig zu verteilen. Die ganze Konstruktion ist noch einmal mit einer jeweiligen Klebeschicht 40, 42 aus elastischem Klebstoff verklebt. Mittels dieser Klebeschichten 40, 42 ist die montierte Befestigungseinrichtung 12 dann an der Seitenwand 18 befestigt. Darüber hinaus befindet sich zur Aufnahme von Vertikallasten in untere Bereich der Befestigungseinrichtung 12 das Dämpfungselement 46 der Stärke b aus Gummi, insbesondere Hartgummi. Durch die Anpassung der Stärke b des Dämpfungselements 46 aus Gummi und der Dicke a des elastischen Klebstoffes ist es ist möglich Toleranzen auszugleichen.

Die Befestigung des Innenausstattungselements an der Seitenwand 18 mittels der Befestigungseinrichtung 12 ist gekennzeichnet durch:
- eine thermische und mechanische Entkopplung des Innenausstattungselements von der Seitenwand 18 und gegebenenfalls auch von dem Boden des Fahrzeuges, mittels der Dämpfungsschicht aus elastischem Schaum,
- die Möglichkeit zum Toleranzausgleich durch Anpassung der Dicke a des Klebstoffes und der Stärke b des Dämpfungselements aus Gummi.
- die Möglichkeit einer elastisch-plastische Verformung und dadurch einer Energieaufnahme der Befestigungseinrichtung 12 im Crashfall bei einer ausreichenden Biegesteifigkeit der C-Profilschiene und
- eine Verbesserte thermische Isolation durch Vermeidung der Wärmebrücken zwischen Seitenwand 18 und Innenausstattungselement.

## Patentansprüche

1. Befestigungseinrichtung (12) zur Befestigung eines Innenausstattungselements, insbesondere eines Fahrgastsitzes, an einer Seitenwand (18) eines Fahrzeuges, bevorzugt eines Schienenfahrzeuges, mit wenigstens einem Befestigungselement (20), das eine C-Profilschiene (22) zur Aufnahme von Nutensteinen für eine wandseitig lösbare Befestigung des Innenausstattungselements an der Befestigungseinrichtung (12) bildet, wobei die Befestigungseinrichtung (12) ihrerseits an zumindest einer Struktur (14) der Seitenwand (18) befestigbar oder befestigt ist,
**gekennzeichnet durch** mindestens eine elastische Dämpfungseinrichtung (28, 30) zum elastischen Befestigen der Befestigungseinrichtung (12) an der als Wandstruktur ausgebildeten mindestens einen Struktur (14) der Seitenwand (18) mittels einer Klebeverbindung und **durch** mindestens ein elastisches Dämpfungselement (46) zum elastischen Abstützen der Befestigungseinrichtung (12) auf mindestens einer als Vorsprung ausgebildeten weiteren Struktur (16) der Seitenwand (18).

2. Befestigungseinrichtung nach Anspruch 1, **dadurch gekennzeichnet, dass** das Befestigungselement (20) aus Leichtmetall oder einer Leichtmetalllegierung besteht.

3. Befestigungseinrichtung nach Anspruch 1 oder 2, **dadurch gekennzeichnet, dass** das Befestigungselement (20) als ein Strangpressprofil ausgebildet ist.

4. Befestigungseinrichtung nach einem der Ansprüche 1 bis 3, **dadurch gekennzeichnet, dass** das Befestigungselement (20) beidseitig der C-Profilschiene (22) flügelartige Ausleger (24, 26) aufweist, an denen die elastischen Dämpfungseinrichtungen (28, 30) angeordnet sind.

5. Befestigungseinrichtung nach einem der Ansprüche 1 bis 4, **dadurch gekennzeichnet, dass** die mindestens eine Dämpfungseinrichtung (28, 30) eine Dämpfungsschicht (32, 34) aus einem Schaummaterial aufweist.

6. Befestigungseinrichtung nach Anspruch 5, **dadurch gekennzeichnet, dass** die Dämpfungseinrichtung (28, 30) ein Blechelement (36, 38) aufweist, das auf der der Grenzfläche der Dämpfungsschicht (32, 34) zum Befestigungselement (20) gegenüberliegenden Oberseite der Dämpfungseinrichtung (28, 30) angeordnet ist.

7. Befestigungseinrichtung nach Anspruch 6, **dadurch gekennzeichnet, dass** das Blechelement (36, 38) auf seiner Oberseite mit einer die Klebeverbindung bildenden elastischen Klebeschicht (40, 42) zur Befestigung an der Wandstruktur (14) der Seitenwand (18) versehen ist.

8. Befestigungseinrichtung nach einem der Ansprüche 1 bis 7, **dadurch gekennzeichnet, dass** die Dämpfungseinrichtung (30) oder zumindest eine der mehreren Dämpfungseinrichtungen (30) in einem ihrer Seitenbereiche mit dem Befestigungselement ein durchgehend ebenes Kopfende (44) bildet, an dem das elastische Dämpfungselement (46) angeordnet ist.

9. Befestigungseinrichtung nach einem der Ansprüche 1 bis 8, **dadurch gekennzeichnet, dass** das Dämpfungselement (46) ein Dämpfungselement aus Gummi ist.

10. Befestigungsanordnung (10) zur Befestigung eines Innenausstattungselements, insbesondere eines Fahrgastsitzes, an einer Seitenwand (18) eines Fahrzeuges, bevorzugt eines Schienenfahrzeuges, mit mindestens einer Struktur (14) der Seitenwand (18) und einer an dieser Struktur (14) dauerhaft oder lösbar befestigten Befestigungseinrichtung (12), **dadurch gekennzeichnet, dass** die mindestens eine Struktur (14) als Wandstruktur ausgebildet ist, wobei die Befestigungsanordnung mindestens eine als Vorsprung ausgebildete weitere Struktur (16) der Seitenwand umfasst und die Befestigungseinrichtung (12) als eine Befestigungseinrichtung (12) nach mindestens einem der vorhergehenden Ansprüche ausgebildet ist, die über ihre mindestens eine elastische Dämpfungseinrichtung (28, 30) an der Wandstruktur (14) elastisch befestigt ist und sich über ihr mindestens ein elastisches Dämpfungselement (46) auf dem Vorsprung (16) abstützt.

## Claims

1. Fastening device (12) for fastening an interior equipment element, particularly a passenger seat, to a side wall (18) of a vehicle, preferably a rail vehicle, having at least one fastening element (20) which forms a C-profile rail (22) for receiving slot nuts for fastening the interior equipment element to the fastening device (12) in a detachable manner on the wall side, wherein the fastening device (12), for its part, can be fastened or is fastened to at least one structure (14) of the side wall (18), **characterized by** at least one elastic damping device (28, 30) for elastically fastening the fastening device (12) to the at least one structure (14) of the side wall (18), which structure is designed as a wall structure, by means of an adhesive bond, and by at least one elastic damping element (46) for elastically supporting the fastening device (12) on at least one further structure (16) of the side wall (18), which structure is designed as a protrusion.

2. Fastening device according to Claim 1, **characterized in that** the fastening element (20) is composed of light metal or a light metal alloy.

3. Fastening device according to Claim 1 or 2, **characterized in that** the fastening device (20) is designed as an extruded profile.

4. Fastening device according to one of Claims 1 to 3, **characterized in that** the fastening element (20) has wing-like extension arms (24, 26), on which the elastic damping devices (28, 30) are arranged, on both sides of the C-profile rail (22).

5. Fastening device according to one of Claims 1 to 4, **characterized in that** the at least one damping device (28, 30) has a damping layer (32, 34) made of a foam material.

6. Fastening device according to Claim 5, **characterized in that** the damping device (28, 30) has a sheet-metal element (36, 38) which is arranged on the upper side of the damping device (28, 30), which upper side is opposite the interface between the damping layer (32, 34) and the fastening element (20).

7. Fastening device according to Claim 6, **characterized in that** the sheet-metal element (36, 38) is provided on the upper side thereof with an elastic adhesive layer (40, 42) which forms the adhesive bond and is intended for fastening to the wall structure (14) of the side wall (18).

8. Fastening device according to one of Claims 1 to 7, **characterized in that** the damping device (30), or at least one of the plurality of damping devices (30), in one of the side regions thereof with the fastening element, forms a continuously flat head end (44), on which the elastic damping element (46) is arranged.

9. Fastening device according to one of Claims 1 to 8, **characterized in that** the damping element (46) is a damping element made of rubber.

10. Fastening arrangement (10) for fastening an interior equipment element, particularly a passenger seat, to a side wall (18) of a vehicle, preferably a rail vehicle, having at least one structure (14) of the side wall (18) and a fastening device (12) which is permanently or detachably fastened to said structure (14), **characterized in that** the at least one structure (14) is designed as a wall structure, wherein the fastening arrangement comprises at least one further structure (16) of the side wall, which structure is designed as a protrusion, and the fastening device (12) is designed as a fastening device (12) according to at least one of the preceding claims, which fastening device is fastened elastically via the at least one elastic damping device (28, 30) thereof to the wall structure (14) and is supported via the at least one elastic damping element (46) thereof on the protrusion (16).

## Revendications

1. Dispositif ( 12 ) de fixation d'un élément d'équipement intérieur, notamment d'un siège de passager, à une paroi ( 18 ) latérale d'un véhicule, de préférence d'un véhicule ferroviaire, comprenant au moins un élément ( 20 ) de fixation, qui forme un rail ( 22 ) à profil en C de réception de coulisseaux pour une fixation amovible du côté de la paroi de l'élément d'équipement intérieur au dispositif ( 12 ) de fixation, le dispositif ( 12 ) de fixation étant fixé pour sa part à au moins une structure ( 14 ) de la paroi ( 18 ) latérale ou pouvant l'être,
**caractérisé par** au moins un dispositif ( 28, 30 ) d'amortissement élastique pour la fixation élastique du dispositif ( 12 ) de fixation à la au moins une structure ( 14 ), constituée en structure de paroi, de la paroi ( 18 ) latérale au moyen d'un collage et par au moins un élément ( 46 ) d'amortissement élastique pour l'appui élastique du dispositif ( 12 ) de fixation sur au moins une autre structure ( 16 ), constituée sous la forme d'une saillie, de la paroi ( 18 ) latérale.

2. Dispositif de fixation suivant la revendication 1, **caractérisé en ce que** l'élément ( 20 ) de fixation est en métal léger ou en un alliage de métal léger.

3. Dispositif de fixation suivant la revendication 1 ou 2, **caractérisé en ce que** l'élément ( 20 ) de fixation est constitué sous la forme d'un profilé filé à la presse.

4. Dispositif de fixation suivant l'une des revendications 1 à 3, **caractérisé en ce que** l'élément ( 20 ) de fixation a, des deux côtés du rail ( 22 ) à profil en C, des bras ( 24, 26 ) de type en aile, sur lesquels les dispositifs ( 28, 30 ) d'amortissement élastique sont montés.

5. Dispositif de fixation suivant l'une des revendications 1 à 4, **caractérisé en ce que** le au moins dispositif ( 28, 30 ) d'amortissement a une couche ( 32, 34 ) d'amortissement en un matériau alvéolaire.

6. Dispositif de fixation suivant la revendication 5, **caractérisé en ce que** le dispositif ( 28, 30 ) d'amortissement a un élément ( 36, 38 ) de tôle, qui est mis sur le côté supérieur du dispositif ( 28, 30 ) d'amortissement, opposé à la surface limite entre la couche ( 32, 34 ) d'amortissement et l'élément ( 20 ) de fixation.

7. Dispositif de fixation suivant la revendication 6, **caractérisé en ce que** l'élément ( 36, 38 ) de tôle est, pour la fixation sur la structure ( 14 ) de la paroi ( 18 ) latérale, pourvu sur son côté supérieur d'une couche ( 40, 42 ) de colle élastique formant le collage.

8. Dispositif de fixation suivant l'une des revendications 1 à 7, **caractérisé en ce que** le dispositif ( 30 ) d'amortissement ou au moins l'un des plusieurs dispositifs ( 30 ) d'amortissement forme, dans l'une de ses régions latérales, avec l'élément de fixation une extrémité ( 44 ) de tête plane continue, sur laquelle l'élément ( 46 ) d'amortissement élastique est monté.

9. Dispositif de fixation suivant l'une des revendications 1 à 8, **caractérisé en ce que** l'élément ( 46 ) d'amortissement est un élément d'amortissement en caoutchouc.

10. Dispositif (10) de fixation d'un élément d'équipement intérieur, notamment d'un siège de passager, à une paroi (18) latérale d'un véhicule, de préférence d'un véhicule ferroviaire, comprenant au moins une structure (14) de la paroi (18) latérale et un dispositif (12) de fixation fixé à cette structure de manière permanente ou amovible, **caractérisé en ce que** la au moins une structure (14) est constituée en structure de paroi, le dispositif de fixation comprenant au moins une autre structure de la paroi latérale constituée sous la forme d'une saillie et le dispositif (12) de fixation étant constituée sous la forme d'un dispositif (12) de fixation suivant au moins l'une des revendications précédentes, qui est fixé élastiquement à la structure (14) de paroi par son au moins un dispositif (28, 30) d'amortissement élastique et s'appuie sur la saillie (16) par son au moins un dispositif (46) d'amortissement élastique.
